# EUROPÄISCHE PATENTSCHRIFT

(11) **EP 1 482 222 B1**
(45) Veröffentlichungstag und Bekanntmachung des Hinweises auf die Patenterteilung: **23.09.2009**
(21) Anmeldenummer: 04012333.3
(22) Anmeldetag: 25.05.2004
(51) Int. Cl.: F16K 11/085, B60H 1/00

(54) **Mehrwegventil für ein Fahrzeug-Kühl/Heiz-System**
Multiple way valve for a vehicle cooling/heating system
Robinet à voies multiples pour un dispositif de refroidissement/chauffage d'un véhicule

(30) Priorität: 26.05.2003 DE 10323900
(43) Veröffentlichungstag der Anmeldung: 01.12.2004
(73) Patentinhaber: J. Eberspächer GmbH & Co. KG, 73730 Esslingen (DE)
(72) Erfinder: Humburg, Michael, 73035 Göppingen (DE)
(74) Vertreter: Ruttensperger, Bernhard

(56) Entgegenhaltungen:
- DE-A- 19 816 522
- FR-A- 2 276 957
- US-A- 2 277 814

## Beschreibung

Die vorliegende Erfindung betrifft ein Mehrwegeventil, umfassend eine Ventilgehäuseanordnung, in welcher eine Ventilkammer ausgebildet ist, wenigstens drei zur Ventilkammer führende Hauptventilanschlüsse, ein Hauptventilorgan, welches zum wahlweisen Unterbrechen und Freigeben der Verbindung der Hauptventilanschlüsse mit der Ventilkammer in eine Mehrzahl von Ventilorganstellungen bringbar ist, wobei in jeder Ventilorganstellung des Hauptventilorgangs wenigstens zwei der Hauptventilanschlüsse in Verbindung mit der Ventilkammer stehen.

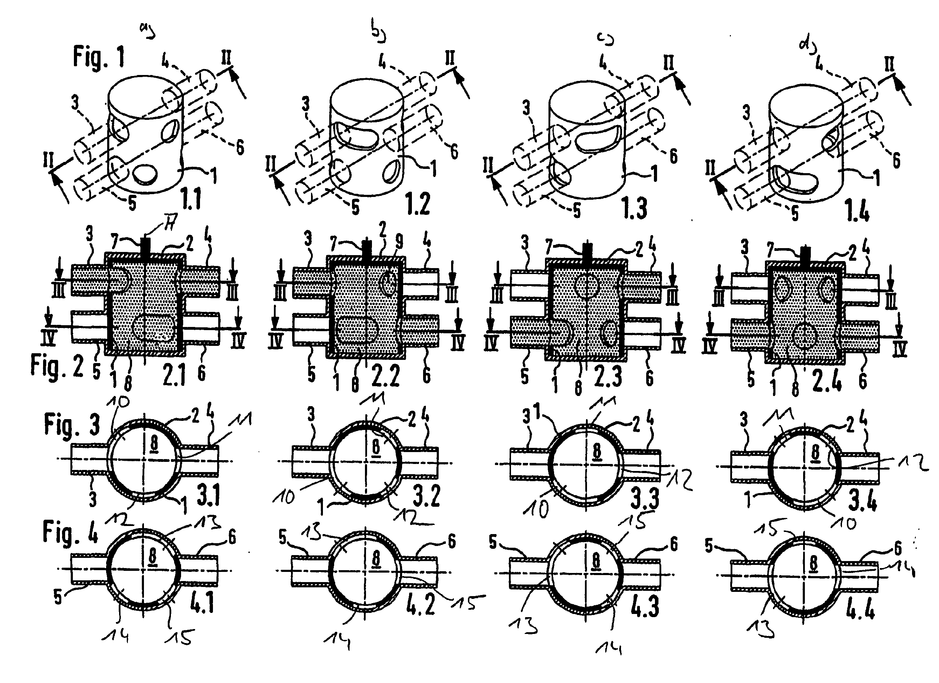

Ein derartiges Mehrwegeventil ist beispielsweise aus der DE 198 16 522 A1 bekannt. Dieses bekannte Ventil ist hinsichtlich seines prinzipiellen Aufbaus und seiner Funktionsweise in den Figuren 1 bis 4 dargestellt und wird nachfolgend mit Bezug auf diese Figuren beschrieben.

Man erkennt vor allem in Fig. 2, dass dieses bekannte Mehrwegeventil einen allgemein mit 2 bezeichneten topf- bzw. zylinderartig ausgebildeten Ventilkörper aufweist, in dem eine Ventilkammer 8 gebildet ist. Vier durch Stutzen, Öffnungen oder dergleichen bereitgestellte Ventilanschlüsse 3, 4, 5 und 6 münden in die zylindrische Umfangswandung des Ventilkörpers 2 ein und stehen somit grundsätzlich in Verbindung mit der Ventilkammer 8. Man erkennt, dass die vier Ventilanschlüsse 3, 4, 5, 6 jeweils einander paarweise gegenüber liegend angeordnet sind, so dass in einer ersten bzw. in der Fig. 2 oberen Ebene mit einem Winkelabstand 180° - bezogen auf eine Ventilkörperlängsachse - die Ventilanschlüsse 3, 4 einander gegenüber liegen, während in einer zweiten bzw. unteren Ebene die beiden Ventilanschlüsse 5 und 6 einander mit einem Winkelabstand von 180° gegenüber liegen, wobei beispielsweise vorgesehen sein kann, dass der Ventilanschluss 5 direkt unter dem Ventilanschluss 3 des anderen Paars von Ventilanschlüssen liegt, während der Ventilanschluss 6 unmittelbar unter dem Ventilanschluss 4 des anderen Paars der Ventilanschlüsse liegt.

In dem Ventilkörper 12 ist ein an dessen Kontur angepasstes im Wesentlichen zylindrisches bzw. auch kreiszylindrisch ausgebildetes Ventilorgan 1 vorgesehen. Dieses ist im Bereich einer Antriebswelle 7 durch einen nicht dargestellten Antriebsmotor zur Drehung um die Achse A antreibbar. In Zuordnung zu jedem Paar von Ventilanschlüssen 3 und 4 bzw. 5 und 6 weist das Ventilorgan 1 jeweils Öffnungen 10, 11, 12 bzw. 13, 14, 15 auf. Diese beiden Gruppen von Öffnungen 10, 11, 12 und 13, 14, 15 sind, ebenso wie die beiden Paare von Ventilanschlüssen 3, 4, und 5, 6, in den beiden vorangehend bereits angesprochenen Ebenen vorgesehen, so dass durch Drehen des Ventilorgans 1 vermittels der Öffnungen 10, 11, 12, 13, 14, 15 die Verbindung der verschiedenen Ventilanschlüsse 3, 4, 5, 6 mit der Ventilkammer 8 unterbrechbar, freigebbar bzw. teilweise freigebbar ist. Man erkennt vor allem auch in den Figuren 3 und 4, dass bei jeder Gruppe von Öffnungen 10, 11, 12 und 13, 14, 15 eine Öffnung mit größerer Umfangserstreckung vorgesehen ist, nämlich die Öffnungen 10 und 13, während zwei Öffnungen mit kleinerer Umfangserstreckung vorgesehen sind, nämlich die Öffnungen 11, 12 und 14, 15. Die Auswahl der Umfangserstreckungen ist derart, dass dann, wenn das Ventilorgan 1 in eine von mehreren Hauptventilstellungen gebracht ist, welche Hauptventilstellungen jeweils durch Drehen des Ventilorgans um 45° aus einer vorangehenden Hauptventilstellung erreicht werden können, die mit geringerer Umfangserstreckung ausgebildeten Öffnungen 11, 12 und 14, 15 entweder mit einem der zugeordneten Ventilanschlüsse 3, 4 oder 5, 6 vollständig ausgerichtet oder vollständig nicht ausgerichtet sind und die mit längerer Umfangserstreckung ausgebildeten Öffnungen 10 und 13 bei jeweils zwei unmittelbar benachbarten Hauptventilstellungen mit jeweils einem der Ventilanschlüsse 3, 4 oder 5, 6 ausgerichtet sind und diesen somit freigeben.

Die Arbeitsweise zur Erlangung der verschiedenen Hauptventilstellungen wird nachfolgend beschrieben. Es sei zunächst angenommen, dass in einer ersten in den Figuren 1 bis 4 jeweils ganz links im Abschnitt a) dargestellten Hauptventilstellung die Öffnung 10 den Ventilanschluss 3 freigibt, während die Öffnung 11 den Ventilanschluss 4 freigibt. Da die Öffnungen 13, 14, 15 grundsätzlich zwar die gleiche Relativanordnung aufweisen, wie dies bei den Öffnungen 10, 11 und 12 der Fall ist, bezüglich diesen jedoch um 45° verdreht sind, ist in dieser ersten Hauptventilstellung keine der Öffnungen 13, 14, 15 in Ausrichtung mit einem der Ventilanschlüsse 5, 6, so dass, wie dies in Fig. 2 erkennbar ist, eine Strömungsverbindung nur zwischen dem Ventilanschluss 3 und dem Ventilanschluss 4 über die Ventilkammer 8 hergestellt ist. Wird ausgehend von der in Fig. 1 gezeigten Hauptventilstellung das Ventilorgan 1 um 45° gedreht, und zwar in der Darstellung im Gegenuhrzeigersinn, so bleibt weiterhin die Öffnung 10 mit längerer Umfangserstreckung in Ausrichtung mit dem Ventilanschluss 3, während keine der Öffnungen 11 und 12 mit dem Ventilanschluss 4 ausgerichtet ist. Bei der unteren Gruppe von Öffnungen ist nunmehr die Öffnung 15 mit dem Ventilanschluss 6 ausgerichtet, während der Ventilanschluss 5 mit keiner der Öffnungen dieser Gruppe ausgerichtet ist. Es besteht somit eine Verbindung zwischen dem Ventilanschluss 3 und dem Ventilanschluss 6 über die Ventilkammer 8.

Wird das Ventilorgan 1 umd 45° weitergedreht zu einer dritten Hauptventilstellung, so wird nunmehr die Öffnung 10 mit längerer Umfangsstrecke der oberen Gruppe von Öffnungen aus der Ausrichtung mit dem Ventilanschluss 3 herausbewegt, während die Öffnung 12 die Verbindung zwischen dem Ventilanschluss 4 und der Ventilkammer 8 freigibt. Bei der unteren Gruppe von Öffnungen ist nunmehr die Öffnung 13 mit längerer Umfangserstreckung in Ausrichtung mit dem Ventilanschluss 5, während der Ventilanschluss 6 mit keiner Öffnung in Ausrichtung ist. Es ist dann die Leitungsverbindung zwischen dem Ventilanschluss 4 und dem Ventilanschluss 5 über die Ventilkammer 8 hergestellt. Wird das Ventilorgan 1 um 45° weitergedreht, so wird eine vierte Hauptventilstellung erreicht. In dieser sind weiterhin die Öffnungen 13 der unteren Gruppe von Öffnungen in Ausrichtung mit dem Ventilanschluss 5. Der Ventilanschluss 6 ist nunmehr in Ausrichtung mit der Öffnung 14, so dass die beiden Ventilanschlüsse 6 und 5 über die Ventilkammer 8 nunmehr miteinander in Verbindung stehen. Von der oberen Gruppe von Öffnungen ist nunmehr keine ausgerichtet mit einem der Ventilanschlüsse 3 oder 4, so dass der in der Fig. 2 ganz rechts erkennbare Zustand erlangt ist.

Würde ausgehend von dieser in den Figuren 1 bis 4 im Abschnitt d) ganz rechts gezeigten vierten Hauptventilstellung das Ventilorgan 1 um weitere 45° gedreht werden, so würde auf Grund der vorhandenen Symmetrie wieder ein Zustand erlangt werden, der der ersten Hauptventilstellung entspricht, wobei jedoch das Ventilorgan 1 dann bezüglich der ersten Hauptventilstellung um 180° verdreht wäre.

Die vorangehende Darstellung zeigt, dass das Vorgeben von vier Hauptventilstellungen im Wesentlichen auch begründet ist durch das definierte Vorsehen der verschiedenen Gruppen von Öffnungen und dem jeweiligen Umfangsabstand bzw. der Umfangserstreckung derselben. Es ist selbstverständlich, dass zwischen diesen vier Hauptventilstellungen Zwischenventilstellungen existieren, in welchen die verschiedenen Öffnungen 10, 11, 12, 13, 14, 15 nicht jeweils vollständig mit jeweiligen Ventilanschlüssen ausgerichtet oder nicht ausgerichtet sind, sondern nur eine teilweise Ausrichtung vorhanden ist, so dass zusätzliche Strömungswege freigeschaltet werden, während andere Strömungswege durch Mindern des Strömungsquerschnittes gedrosselt werden. Wird beispielsweise eine zwischen den Hauptventilstellungen 1 und 2 liegende Zwischenventilstellung angefahren, so sind die Ventilanschlüsse 3 und 4 immer noch in Verbindung, wobei jedoch die Öffnung 11 nur noch teilweise bzw. halb ausgerichtet ist mit dem Ventilanschluss 4. Gleichzeitig ist jedoch die Öffnung 15 nunmehr teilweise mit dem Ventilanschluss 6 ausgerichtet, so dass in diesem Zwischenzustand eine Verbindung zwischen den Ventilanschlüssen 3, 4 und 6 über die Ventilkammer 8 vorhanden ist. Wird eine zwischen der zweiten und der dritten Hauptventilstellung liegende Zwischenventilstellung angefahren, so ist über die Öffnungen 10 und 12 nunmehr eine Verbindung zwischen den Ventilanschlüssen 3 und 4 und der Ventilkammer 8 hergestellt, während über die Öffnungen 13 und 15 auch die Ventilanschlüsse 5 und 6 in Verbindung mit der Ventilkammer 8 stehen. Es ergibt sich somit ein Zustand, in dem alle der Ventilanschlüsse 3, 4, 5, 6 miteinander über die Ventilkammer 8 kommunizieren. Wird das Ventilorgan in eine Zwischenstellung zwischen den Hauptventilstellungen 3 und 4 gebracht, so bleibt weiterhin der Ventilanschluss 3 abgeschlossen, während zusätzlich nunmehr über die Öffnung 14 der Ventilanschluss 6 zugeschaltet ist und somit die Ventilanschlüsse 4, 5 und 6 miteinander über die Ventilkammer 8 in Verbindung stehen.

Daraus erkennt man, dass bei Einnehmen einer jeweiligen Zwischenventilstellung die dann zur Fluidkommunikation freigegebenen Ventilanschlüsse gebildet sind durch die Summe der in den beidseits der Zwischenventilstellung liegenden Hauptventilstellungen freigegebenen Ventilanschlüsse. Durch Annähern des Ventilorgans 1 an jeweils eine der Hauptventilstellungen bzw. Entfernen von der anderen der Hauptventilstellungen kann erreicht werden, dass die in der einen Ventilstellung grundsätzlich freigegebenen Ventilanschlüsse mit größerem Querschnitt freigegeben sind, während die in der dann weiter entfernt liegenden Hauptventilstellung freigegebenen Ventilanschlüsse stärker gedrosselt sind. Auf diese Art und Weise kann auch bei Freigeben von mehr als zwei Ventilanschlüssen eine definierte Strömungslenkung durch definiertes Erzeugen von Drosselwirkungen erlangt werden.

Von Bedeutung ist jedoch, dass keine Ventilstellung eingenommen werden kann, in der nicht mindestens zwei der Ventilanschlüsse miteinander kommunizieren, um auf diese Art und Weise eine definierte Fluidströmung über dieses Mehrwegeventil hinweg zuzulassen.

Diese Art eines Mehrwegeventils findet insbesondere Anwendung in Fahrzeug-Kühl/Heiz-Systemen, bei welchen der Kühlmittelkreislauf des Antriebsaggregats, im Allgemeinen einer Brennkraftmaschine, wahlweise so geleitet werden soll, dass beispielsweise in einer Kaltstartphase das Kühlmedium nur durch das Antriebsaggregat zirkuliert und nicht in Kontakt mit irgendeiner Wärmetauscheranordnung gelangen kann, dass bei vergleichsweise hoher Kühlmediumtemperatur dieses zwischen dem Antriebsaggregat und einer Wärmetauscheranordnung, beispielsweise einem Kühler, zirkulieren kann, dass bei vergleichsweise hoher Temperatur des Kühlmediums und Heizbedarf im Fahrzeug alternativ oder zusätzlich zum Zuschalten des Kühlers eine weitere Wärmetauscheranordnung, beispielsweise ein Heizungswärmetauscher, in den Fluidkreislauf eingeschaltet werden kann, oder dass in der Startphase, also bei einem vergleichsweise kalten Kühlmedium und bei Heizbedarf im Fahrzeug, ein Fluidkreislauf zwischen dem Antriebsaggregat und dem Heizungswärmetauscher aufgebaut wird, während der Kühler von diesem Kreislauf abgekoppelt ist.

Ein Problem bei einem derartigen Ventil kann dann auftreten, wenn dieses in einer seiner Ventilstellung einen Defekt erleidet und nicht mehr verstellt werden kann. Dabei ist insbesondere der Zustand kritisch, in dem das Mehrwegeventil so geschaltet ist, dass eine Zirkulation nur durch das Antriebsaggregat hindurch stattfindet, um das Kühlmedium bzw. das Antriebsaggregat möglichst schnell auf die gewünschte Betriebstemperatur zu bringen. Kann das Ventil nach Beenden dieser Startphase nicht umgeschaltet werden, so besteht die Gefahr einer Überhitzung des Kühlmediums und des Antriebsaggregats.

Es ist daher die Aufgabe der vorliegenden Erfindung, ein gattungsgemäßes Mehrwegeventil derart weiterzubilden, dass eine erhöhte Sicherheit bei bzw. gegen Ventildefekt erlangt werden kann.

Erfindungsgemäß wird diese Aufgabe gelöst durch ein Mehrwegeventil, umfassend eine Ventilgehäuseanordnung, in welcher eine Ventilkammer ausgebildet ist, wenigstens drei zur Ventilkammer führende Hauptventilanschlüsse, ein Hauptventilorgan, welches zum wahlweisen Unterbrechen und Freigeben der Verbindung der Hauptventilanschlüsse mit der Ventilkammer in eine Mehrzahl von Ventilorganstellungen bringbar ist, wobei in jeder Ventilorganstellung des Hauptventilorgangs wenigstens zwei der Hauptventilanschlüsse in Verbindung mit der Ventilkammer stehen,
- eine erste Fluidleitung, welche eine Verbindung zwischen einem ersten Hauptventilanschluss und einer ersten Wärmetauscheranordnung vorsieht,
- eine zweite Fluidleitung, welche eine Verbindung zwischen einem zweiten Hauptventilanschluss und der ersten Wärmetauscheranordnung vorsieht,
- eine dritte Fluidleitung, welche eine Verbindung zwischen einem dritten Hauptbetriebsanschluss und einer zweiten Wärmetauscheranordnung vorsieht,
- eine vierte Fluidleitung, welche eine Verbindung zwischen einem vierten Hauptventilanschluss und der zweiten Wärmetauscheranordnung vorsieht,
- eine fünfte Fluidleitung, welche eine Verbindung zwischen dem ersten Hauptventilanschluss oder dem zweiten Hauptventilanschluss und einem Antriebsaggregat vorsieht,
- eine sechste Fluidleitung, welche eine Verbindung zwischen dem dritten Hauptventilanschluss oder dem vierten Hauptventilanschluss und dem Antriebsaggregat vorsieht,
.

Durch das Bereitstellen eines Nebenventilanschlusses wird es möglich, in sicherheitskritischen Zuständen zusätzlich eine Zirkulation aufzubauen bzw. einen zusätzlichen Strömungsweg zu öffnen, um dann das darin zirkulierende Fluid zu kühlen, so dass gemäß einem Aspekt der vorliegenden Erfindung vorgesehen sein kann, dass das Nebenventilorgan in Abhängigkeit von einer Temperatur im Bereich der Ventilkammer zwischen einer Unterbrechungsstellung und einer Freigabestellung verstellbar ist und eine siebte Fluidleitung, welche eine Verbindung zwischen dem Nebenventilanschluss und einer Fluidleitung von ertser Fluidleitung, zweiter Fluidleitung, dritter Fluidleitung und vierter Fluidleitung vorsieht. Hierzu ist es beispielsweise möglich, dass das Nebenventilorgan ein Stellelement aufweist, das durch thermisch induzierte Abmessungsänderung das Nebenventilorgan zwischen der Unterbrechungsstellung und der Freigabestellung verstellt.

Um beispielsweise nach dem Beenden eines sicherheitskritischen Zustandes wieder in den normalen Betrieb übergehen zu können, wird vorgeschlagen, dass das Stellelement das Nebenventilorgan gegen eine dieses in Richtung Unterbrechungsstellung vorspannende Krafteinwirkung in Richtung Freigabestellung verstellt.

Gemäß einem weiteren vorteilhaften Aspekt kann vorgesehen sein, dass durch Verstellung des Nebenventilorgans zwischen der Unterbrechungsstellung und der Freigabestellung die Verbindung von wenigstens einem der Hauptventilanschlüsse mit der Ventikammer veränderbar ist.

Insbesondere beim Einsatz eines erfindungsgemäßen Mehrwegeventils in einem Kühl/Heiz-System eines Kraftfahrzeugs ist es vorteilhaft, wenn dieses Ventil vier Hauptventilanschlüsse aufweist.

Um bei diesem System für die vorangehend angesprochene Sicherheit durch zwangsweises Kühlen des Fluids bei Überhitzung sorgen zu können, wird weiter vorgeschlagen, dass unabhängig von der Ventilorganstellung des Hauptventilorgans bei aufgehobener Unterbrechung der Verbindung zwischen dem Nebenventilanschluss und der Ventilkammer eine Fluidaustauschverbindung zwischen dem Antriebsaggregat und einer der Wärmetauscheranordnungen bereitgestellt ist.

Gemäß einem weiteren Aspekt kann bei dem erfindungsgemäßen System vorgesehen sein, dass die zweite Wärmetauscheranordnung einen Fahrzeugheizungswärmetauscher umfasst, dass der dritten Fluidleitung oder der vierten Fluidleitung ein Heizgerät zum Erwärmen von darin strömendem Fluid zugeordnet ist, und dass eine Ventilanordnung vorgesehen ist, durch welche wahlweise die dritte Fluidleitung und die vierte Fluidleitung vom dritten Hauptventilanschluss und vom vierten Hauptventilanschluss abkoppelbar ist, um eine Fluidzirkulation zwischen der zweiten Wärmetauscheranordnung und dem Heizgerät zu erzeugen, oder die dritte Fluidleitung und die vierte Fluidleitung zur Anbindung der zweiten Wärmetauscheranordnung einen dritten Hauptventilanschluss und den vierten Hauptventilanschluss freigebbar ist.

Die vorliegende Erfindung wird nachfolgend mit Bezug auf die beiliegenden Figuren detailliert beschrieben. Es zeigt:
- Fig. 1: in den Darstellungen a), b), c) und d) ein Ventilorgan eines bekannten 4/4-Wegeventils in einer ersten Hauptventilstellung einer zweiten Hauptventilstellung, einer dritten Hauptventilstellung bzw. einer vierten Hauptventilstellung in Zuordnung zu vier Ventilanschlüssen;
- Fig. 2: in den Darstellungen a), b), c) und d) ein in Fig. 1 schematisch angedeutetes 4/4-Wegeventil des Stands der Technik in den vier Hauptventilstellungen, jeweils geschnitten längs einer Linie II - II in Fig. 1;
- Fig. 3: das 4/4-Wegeventil der Fig. 2 in den verschiedenen Hauptventilstellungen, jeweils geschnitten längs einer Linie III - III in Fig. 2;
- Fig. 4: das 4/4-Wegeventil der Fig. 2 in den verschiedenen Hauptventilstellungen, jeweils geschnitten längs einer Linie IV - IV in Fig. 2;
- Fig. 5: eine Längsschnittansicht eines erfindungsgemäß ausgestalteten Mehrwegeventils;
- Fig. 6: ein Fahrzeug-Kühl/Heiz-System, in welchem ein erfindungsgemäßes Mehrwegeventil vorgesehen ist, in welchem ein Kühlmedium nur durch ein Antriebsaggregat zirkuliert;
- Fig. 7: das System der Fig. 6 in einem Betriebszustand, in welchem ein Kühlmedium durch das Antriebsaggregat und einem Heizungswärmetauscher zirkuliert;
- Fig. 8: das System der Fig. 8 in einem Betriebszustand, in welchem das Kühlmedium durch das Antriebsaggregat, den Heizungswärmetauscher und einen Kühlerwärmetauscher zirkuliert;
- Fig. 9: das System der Fig. 6 in einem Betriebszustand, in welchem das Kühlemdium durch das Antriebsaggregat und den Kühlerwärmetauscher zirkuliert;
- Fig. 10: das System der Fig. 6 in einem Fehlerzustand des Mehrwegeventils;
- Fig. 11: einer der Fig. 6 entsprechende Darstellung eines abgewandelten Systems.

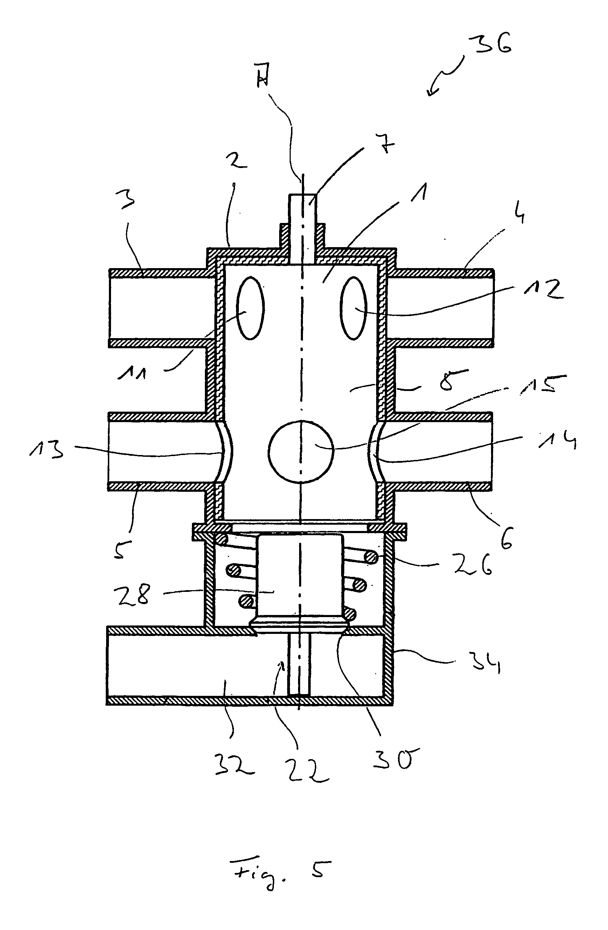

Zunächst wird mit Bezug auf die Fig. 5 der grundsätzliche Aufbau eines erfindungsgemäßen Mehrwegeventils 36 beschrieben. Dieses Mehrwegeventil 36 ist grundsätzlich bzw. in wesentlichen Bereichen so aufgebaut, wie das aus der DE 198 16 522 A1 bekannte Mehrwegeventil, welches vorangehend mit Bezug auf die Figuren 1 bis 4 detailliert beschrieben worden ist. Insofern also Übereinstimmung besteht, wird hiermit Bezug auf die vorangehenden Ausführungen bzw. auch den Offenbarungsgehalt der DE 198 16 522 A1 genommen.

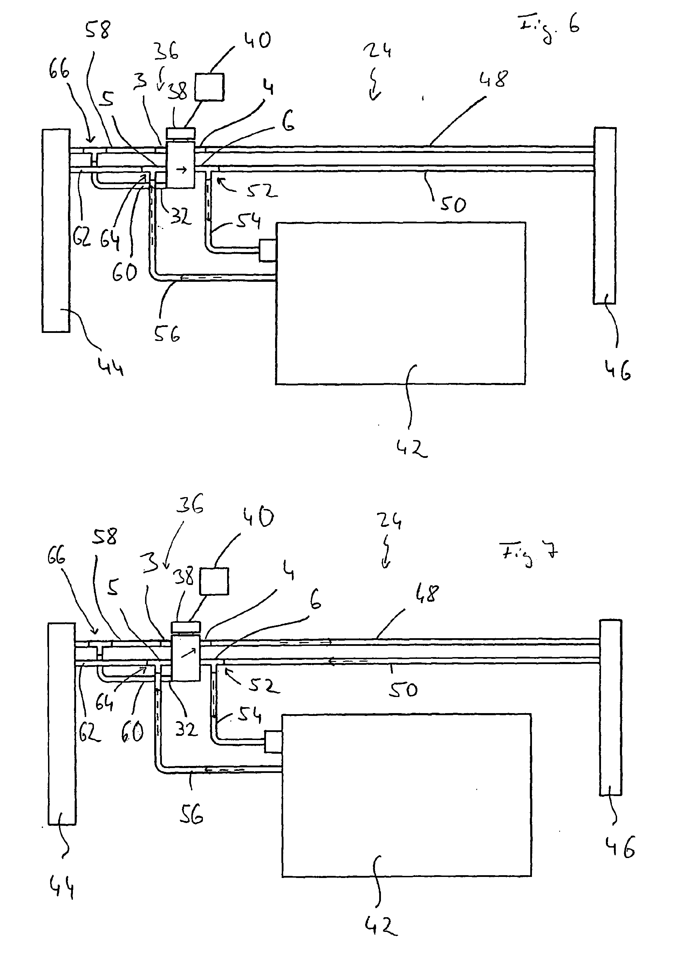

Man erkennt in Fig. 5 auch den zylindrisch bzw. kreiszylindrisch ausgebildeten Ventilkörper 2, in welchen die Ventilöffnungen 3, 4, 5 und 6, welche nunmehr sogenannte Hauptventilöffnungen bilden, jeweils paarweise (3 und 4 bzw. 5 und 6) einander gegenüber liegend in zwei in Richtung der Längsachse des Ventilkörpers 2 versetzten Ebenen einmünden. In dem Ventilkörper 2 ist wieder das mit der Außenumfangswandung des Ventilkörpers 2 entsprechende Kontur bzw. Formgebung ausgebildete Ventilorgan 1 nunmehr als Hauptventilorgan vorgesehen. Über den Stift bzw. die Welle 7 kann dieses Ventilorgan 1 durch einen beispielsweise in Fig. 6 erkennbaren Antriebsmotor 38, beispielsweise Schrittmotor, unter der Ansteuerung eines Steuergeräts 40 zur Drehung um die Achse A angetrieben werden, um die vorangehend beschriebenen Ventilstellungen, insbesondere also die Hauptventilstellungen in den Darstellungen a), b), c) und d) der Figuren 1 bis 4 und natürlich auch sämtliche dazwischen liegende Zwischenventilstellungen zu bringen. Hinsichtlich der Strömungsverbindung zwischen den Hauptventilanschlüssen 3, 4, 5 und 6 ergeben sich somit die gleichen Zustände, wie vorangehend beschrieben.

Man erkennt in Fig. 5 jedoch, dass der Ventilkörper 2 an einer Seite, in der Darstellung der der Antriebsverbindung des Hauptventilorgans 1 entgegengesetzten Seite, offen ist bzw. dort mit einem weiteren Ventilgehäuse 34 verbunden ist. Zu diesem Ventilgehäuse 34 führt bzw. darin vorgesehen ist eine Nebenventilöffnung 32, die grundsätzlich auch in Verbindung mit der Ventilkammer 8 steht bzw. bringabr ist. Hierzu ist in dem Gehäuse 34 eine Ventilöffnung 30 vorgesehen, auf welcher ein Nebenventilorgan 28 unter der Vorspannung einer Vorspannfeder 26 aufsitzt. In dem in der Fig. 5 dargestellten Zustand ist also die Verbindung zwischen dem Nebenventilanschluss 32 und der Ventilkammer 8 durch das in seine Schließstellung vorgespannte Nebenventilorgan 28 abgeschlossen. Es sei hier darauf hingewiesen, dass die Vorspannfeder 26 sich beispielsweise an einem Flanschbereich des Ventilkörpers 2 abstützen kann, welcher im Verbindungsbereich des Ventilkörpers 2 mit dem Gehäuse 34 gebildet ist.

Dem Nebenventilorgan 28 ist ein Stellelement 22 zugeordnet, das am Nebenventilorgan 28 einerseits und am Gehäuse 34 andererseits abgestützt ist. Dieses Stellelement, das beispielsweise auch an einem Bodenbereich des topfartig ausgebildeten Nebenventilorgans 28 abgestützt sein kann, umfasst ein Kolben/Kolbenstangen-Element, das an einem topfartigen Bodenbereich des Nebenventilorgans 28 unter Zwischenlagerung eines Materials mit vergleichsweise großem thermischen Dehnungskoeffizienten, beispielsweise Wachs, abgestützt ist und andernends, wie in Fig. 5 erkennbar, am Gehäuse 34 abgestützt ist. Wird dieses Stellelement 22 erwärmt, so dehnt es sich aus und beaufschlagt dabei das Nebenventilorgan 28 entgegen zur Vorspannwirkung der Feder 26, so dass bei ausreichender Beaufschlagungswirkung das Ventilorgan 28 die Öffnung 30 freigibt bzw. teilweise freigibt, je nach Ausmaß der Erwärmung und Ausdehnung des Stellelements 22.

Man erkennt aus der vorangehenden Beschreibung, dass somit der Stellzustand des Nebenventilorgans 28 abhängig ist von der Temperatur, die im Bereich des Mehrwegeventils 36, insbesondere im Bereich der Ventilkammer 8 desselben vorherrscht. Bei ansteigender bzw. höherer Temperatur in diesem Bereich, welche Temperatur im Wesentlichen auch vorgegeben ist durch die Temperatur des die Ventilkammer 8 durchströmenden bzw. des darin sich aufhaltenden Fluids bzw. Kühlmediums, öffnet das Nebenventilorgan 28 und stellt somit eine Verbindung zwischen dem Nebenventilanschluss 32 und der Verntilkammer 8 her. Diese Charakteristik kann, wie im Folgenden beschrieben wird, dazu genutzt werden, temperaturabhängig einen zusätzlichen Strömungsweg freizuschalten bzw. zu unterbrechen, um somit eine erhöhte Betriebssicherheit eines mit einem derartigen Mehrwegeventil ausgestatteten Kühl/Heiz-Systems, beispielsweise in einem Kraftfahrzeug, bereitzustellen. Dies wird insbesondere nachfolgend mit Bezug auf die Figuren 6 bis 10 beschrieben, welche verschiedene Betriebszustände eines mit dem in Fig. 5 dargestellten Mehrwegeventils 36 ausgestatteten Kühl/Heiz-Systems 24 zeigen.

Das in Fig. 6 gezeigte Kühl/Heiz-System 24 zeigt zunächst als wesentlichen Systembereich ein mit 42 bezeichnetes und beispielsweise als Brennkraftmaschine ausgestaltetes Antriebsaggregat. Weiterhin sind ein Kühlerwärmetauscher 44 und ein Heizungswärmetauscher 46 vorgesehen. Im Kühlerwärmetauscher 44 kann das zirkulierende Kühlmedium, beispielsweise Wasser, Wärme zur Umgebung hin abgeben. Im Heizungswärmetauscher 46 kann Wärme auf in einen Fahrzeuginnenraum einzuleitende Luft übertragen werden. Zwischen dem Hauptventilanschluss 4 und dem Heizungswärmetauscher 46 ist eine Leitung 48 vorgesehen. Ebenso ist zwischen dem Hauptventilanschluss 6 und dem Heizungswärmetauscher 46 eine Leitung 50 vorgesehen, von welcher im Bereich einer Abzweigung 52 eine Leitung 54 zum Antriebsaggregat 42 hin abzweigt. Somit ist auch das Antriebsaggregat 42 in Verbindung mit dem Hauptventilanschluss 6.

Zwischen dem Hauptventilanschluss 3 und dem Kühlerwärmetauscher 44 ist eine Leitung 58 vorgesehen, ebenso wie zwischen dem Hauptventilanschluss 5 und dem Kühlerwärmetauscher 44 eine Leitung 62 vorgesehen ist. Von dieser Leitung 62 zweigt eine Leitung 56 zum Antriebsaggregat 42 ab, so dass auch diese in Verbindung mit dem Hauptventilanschluss 5 ist. Weiterhin ist durch eine Abzweigung 66 und eine Leitung 60 der Nebenventilanschluss 32 in Verbindung mit der Leitung 58 und somit auch dem Hauptventilanschluss 3 bzw. dem Kühlerwärmetauscher 4.

Es sei nun angenommen, dass das System der Fig. 6 in einem Kaltstartzustand ist, bei welchem also kurz nach dem Anlassen des Antriebsaggregats 42 dieses und auch das zirkulierende Kühlmedium noch eine Temperatur weit unter der gewünschten Betriebstemperatur aufweisen. Das Mehrwegeventil 36 wird numehr in die in den Figuren 1 bis 4d) gezeigte vierte Hauptventilstellung gebracht, in welcher die beiden Hauptventilanschlüsse 5 und 6 miteinander in Verbindung stehen. Da das Kühlmedium eine vergleichsweise niedrige Temperatur aufweist, wird das Nebenventilorgan 28 den Nebenventilanschluss 32 absperren, so dass, wie durch strichlierte Pfeile angedeutet, das Kühlmedium über die Leitungen 56 und 54 und die Hauptventilanschlüsse 5 und 6 durch das Antriebsaggregat 42 zirkulieren kann, wobei hier selbstverständlich eine entsprechende Zirkulationspumpe beispielsweise im Bereich des Antriebsaggregats 42 vorgesehen sein kann.

Ist das System 24 ausreichend erwärmt worden oder ist es zusätzlich auch erforderlich, im Heizungswärmetauscher 46 Luft zum Einspeisen in den Fahrzeuginnenraum zu erwärmen, so wird nunmehr das Mehrwegeventil 36 in die dritte Hauptventilstellung gebracht, in der eine Verbindung zwischen den Hauptventilanschlüssen 5 und 4 vorhanden ist.

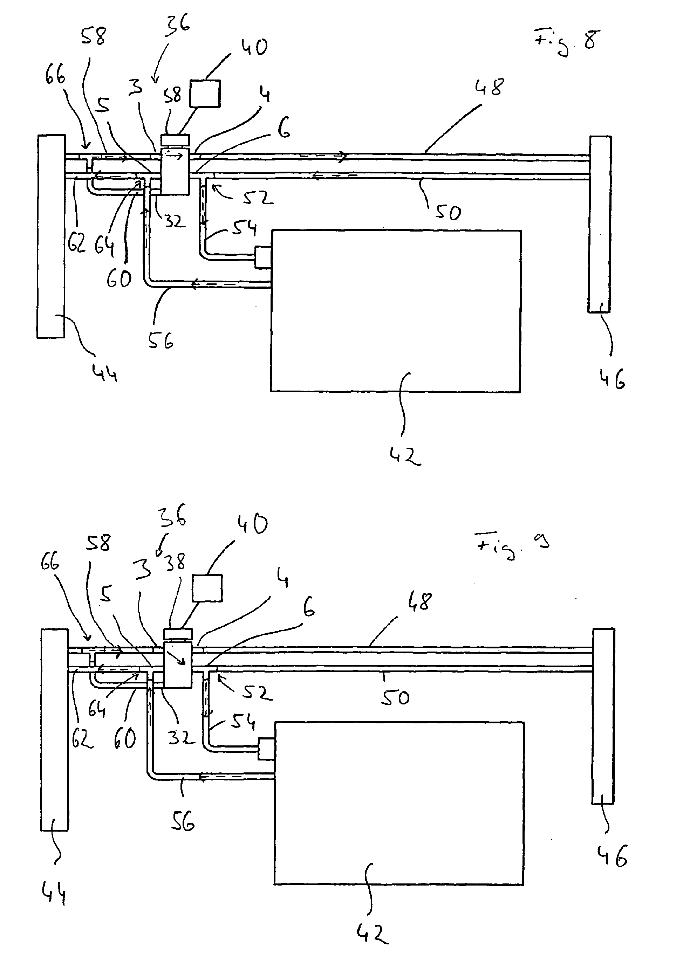

Soll zusätzlich nunmehr nach weiterer Erwärmung des Heizmediums dieses auch im Bereich des Kühlerwärmetauschers 44 gekühlt werden, so wird das Mehrwegeventil 36 in einen Zustand gebracht, in welchem die Strömungsverbindung zwischen den Hauptventilanschlüssen 5 und 6 unterbrochen ist, während eine Verbindung zwischen den Hauptventilanschlüssen 3 und 4 vorhanden ist. Die Darstellungen der Figuren 1 bis 4 zeigen, dass dies die im Abschnitt a) gezeigte erste Hauptventilstellung ist (Fig. 8).

Soll das Heizmedium nicht zum Heizungswärmetauscher 46 strömen, sondern nur zum Kühlerwärmetauscher 44 strömen, so wird nunmehr das Mehrwegeventil 36 in die im Abschnitt b) der Figuren 1 bis 4 gezeigte zweite Hauptventilstellung gebracht, in welcher eine Verbindung zwischen den Hauptventilanschlüssen 3 und 6 vorhanden ist, während die Hauptventilanschlüsse 5 und 4 mit der Ventilkammer 8 nicht in Verbindung stehen. Das Heizmedium strömt dann über die Leitungen 56 und 62 zum Kühlerwärmetauscher 44 und von diesem über die Leitung 58, den Hauptventilanschluss 3, die Ventilkammer 8, den Hauptventilanschluss 6 und die Leitung 54 zum Antriebsaggregat 42 zurück (Fig. 9).

Vorangehend sind die verschiedenen im normalen Betrieb auftretenden Zustände beschrieben worden, die durch Stellen des Mehrwegeventils 36 in eine seiner Hauptventilstellungen erhalten werden. In all diesen Zuständen wird im normalen Betrieb durch entsprechende Wärmeabgabe dafür gesorgt, dass das Kühlmedium eine bestimmte maximale Temperatur nicht überschreitet. Es ist selbstverständlich, dass in den vorangehend beschriebenen Zuständen die Fluidzirkulation nicht nur in der eingezeichneten Richtung erfolgen kann. Selbstverständlich ist die Strömung in umgekehrter Richtung ebenso möglich.

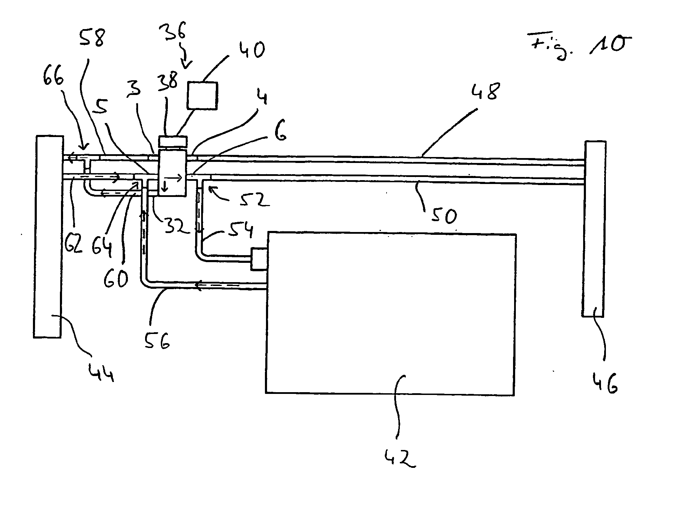

Tritt in dem System 24 ein Defekt insbesondere im Bereich des Mehrwegeventils 36 auf, der dazu führt, dass dieses nicht mehr geeigneterweise angesteuert bzw. verstellt werden kann, so besteht grundsätzlich die Gefahr, dass durch die nicht mehr vorhandene Möglichkeit, Wärme vom Kühlmedium abzugeben, eine Überhitzung auftritt. Ein derartiger Defekt wäre insbesondere in dem in Fig. 6 gezeigten Betriebszustand kritisch, da auf Grund der Tatsache, dass hier überhaupt kein Wärmetauscher in den Kreislauf eingeschaltet ist, die Möglichkeit zur Abgabe von Wärme von dem Kühlmedium praktisch nicht besteht. Dieser Fehlerzustand ist beispielhaft in der Fig. 10 gezeigt. Es ist zunächst eine Fluidzirkulation über die Leitungen 56 und 54 und die Hauptventilanschlüsse 5 und 6 vorgesehen, um beispielsweise das Kühlmedium möglichst schnell zu erwärmen. Soll nach ausreichender Erwärmung dann umgeschaltet werden und ist dies auf Grund eines Defekts beispielsweise im Bereich des Mehrwegeventils 36 nicht möglich, so wird sich das Kühlmedium bei weiter andauernder Zirkulation durch die Leitungen 56 und 54 zunehmend erwärmen, was auch zur Erwärmung im Bereich der Ventilkammer 8 bzw. im Bereich des gesamten Mehrwegeventils 36 führen wird. Auch das mit Bezug auf die Fig. 5 vorangehend beschriebene Stellelement 22 wird sich dabei jedoch erwärmen. Bei ausreichend starker Erwärmung wird dieses Stellelement 26 dann das Nebenventilorgan 28 entgegen der Vorspannwirkung der Vorspannfeder 26 verschieben, so dass die Öffnung 30 zumindest teilweise freigegeben wird und eine Verbindung zwischen der Ventilkammer 8 und dem Nebenventilanschluss 32 erzeugt wird. Wie in Fig. 10 angedeutet, ist nunmehr über die Ventilkammer 8 hinweg auch eine Verbindung zwischen der Hauptventilöffnung 5 und der Nebenventilöffnung 32 vorhanden, so dass zusätzlich über die Leitung 60, die Leitung 58 ab der Abzweigung 66, den Kühlerwärmetauscher 44 und die Leitung 62 ein Zirkulationsabschnitt freigeschaltet wird, welcher das durch Durchströmen des Kühlerwärmetauschers 44 ermöglicht. Somit besteht generell eine Zirkulationsverbindung zwischen dem Antriebsaggregat 42 und dem Kühlerwärmetauscher 44, so dass zumindest ein Teil des über die Leitung 56 das Antriebsaggregat 52 verlassenden Kühlmediums durch den Kühlerwärmetauscher 44 zirkuliert und somit gekühlt wird. Dieser Anteil kann mit zunehmender Temperatur dadurch noch vergrößert werden, dass das Stellelement 22 auf Grund der dann ebenfalls auftretenden weiteren Dehnung das Nebenventilorgan 28 weiter von der Öffnung 30 weg bewegt und somit die durch das Nebenventilorgan 28 erzeugte Drosselwirkung weiter reduziert wird. Wird das Kühlmedium durch dieses Miteinbeziehen des Kühlerwärmetauschers 44 in den Kreislauf wieder ausreichend gekühlt, so wird sich auch das Stellelement 22 abkühlen und zusammenziehen, was zur Folge hat, dass der Nebenventilanschluss 32 beispielsweise wieder vollständig von der Ventilkammer 8 abgekoppelt werden kann.

Durch das Bereitstellen des Nebenventilanschlusses 32 bei dem erfindungsgemäßen Mehrwegeventil 36, welcher Nebenventilanschluss 32 temperaturabhängig öffnet oder schließt, wird es nun möglich, eine zusätzliche Sicherheitsfunktion in das System zu integrieren, welche bei einem Defekt im Bereich des Mehrwegeventils 36 eine Überhitzung vermeiden kann. Es sei hier darauf hingewiesen, dass nicht nur in dem in Fig. 6 gezeigten Betriebszustand, also der Kaltstartphase, diese Sicherungsfunktion von großem Vorteil ist. Auch in dem in Fig. 7 gezeigten Zustand, in welchem Wärme nur im Bereich des Heizungswärmetauschers 46 abgegeben wird, kann bei der Gefahr der Überhitzung durch Freigeben des Nebenventilanschlusses 32 dafür gesorgt werden, dass auch der Kühlerwärmetauscher 34 in den Strömungskreislauf miteinbezogen wird, um somit die Sicherungsfunktion erlangen zu können.

Es sei hier grundsätzlich darauf hingewiesen, dass selbstverständlich der Nebenventilanschluss 32 alternativ oder zusätzlich beispielsweise auch zur Leitung 48 führen könnte. Dies hätte zur Folge, dass bei dem in Fig. 9 dargestellten Betriebszustand, bei welchem der Heizungswärmetauscher 46 grundsätzlich nicht in den Kreislauf eingeschaltet ist, bei Überhitzung eine Verbindung zwischen dem Nebenventilanschluss 32 und somit der Ventilkammer 8 und dieser Leitung 48 erzeugt wird, so dass das Kühlmedium dann durch die Leitung 48 und den Heizungswärmetauscher 46 und die Leitung 50 nach weiterer Wärmeabgabe zur Leitung 54 und somit zum Antriebsaggregat 42 zurückströmen könnte.

Es ist selbstverständlich, dass durch die Auslegung der verschiedenen Strömungsquerschnitte in den Leitungen bzw. in den verschiedenen Ventilanschlüssen dafür gesorgt werden kann, durch Bereitstellung definierter Strömungswiderstände auch entsprechend definierte Strömungsverteilungen zu erlangen. Auch ist es grundsätzlich denkbar, das Nebenventilorgan 28 so auszugestalten, dass es bei seiner Bewegung nicht nur die Öffnung 30 freigibt bzw. abschließt, sondern auch in Wechselwirkung mit einem der Hauptventilanschlüsse 3 bis 6 beispielsweise dem Hauptventilanschluss 5 tritt, um diesen beispielsweise beim Freigeben der Öffnung 30 zumindest teilweise abzuschließen.

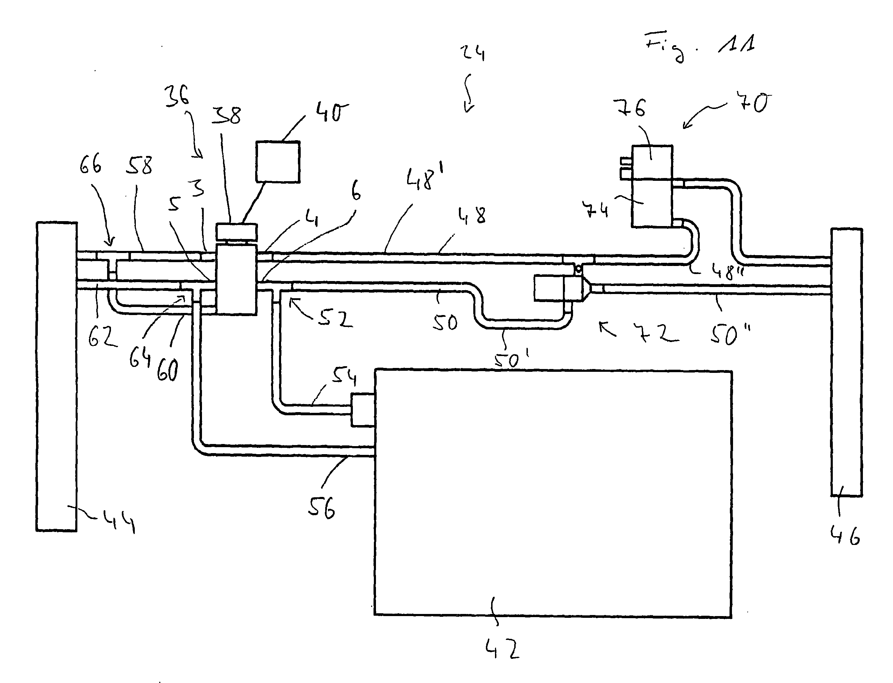

Eine alternative Ausgestaltungsform eines erfindungsgemäßen Kühl/Heiz-Systems 24 ist in Fig. 11 gezeigt. Dieses Sytstem ist grundsätzlich von dem gleichen Aufbau, wie vorangehend mit Bezug auf die Figuren 6 bis 10 beschrieben, weist jedoch zusätzlich ein als Standheizung bzw. ggf. auch Zuheizer wirksames Heizgerät 70 mit einer Multifunktionspumpe 72 auf. Das Heizgerät 70 kann von herkömmlichem Aufbau sein und eine Wärmetauscheranordnung 74 umfassen, in welcher Heizwärme, die in einem Brennerbereich 76 erzeugt wird, auf das Kühlmedium übertragen werden kann, das in der Leitung 48 strömt. Die Pumpe 72 kann derart ausgestaltet sein, dass sie zusätzlich auch die Funktion eines wahlweise umschaltbaren Ventils erfüllen kann. Dabei ist der Aufbau derart, dass sowohl die Leitung 48, als auch die Leitung 50 jeweils in zwei Leitungsabschnitte 48' und 48" bzw. 50' und 50" unterteilt werden kann. Der Leitungsabschnitt 48' liegt zwischen dem Hauptventilanschluss 4 und der Pumpe 72, während der Leitungsabschnitt 48" zwischen der Pumpe 72 und dem Heizungswärmetauscher 46 liegt und auch das Heizgerät 70 aufweist. Der Leitungsabschnitt 50' liegt zwischen dem Hauptventilanschluss 6 und der Pumpe 72, während der Leitungsabschnitt 50" zwischen der Pumpe 72 und dem Heizungswärmetauscher 46 liegt. Durch entsprechende Ansteuerung der Pumpe 72 bzw. einer dadurch bereitgestellten Ventilanordnung wird es möglich, einen selbständigen Zirkulationskreislauf zu schaffen, welcher die beiden Leitungsabschnitte 48' und 50', das Heizgerät 70, den Heizungswärmetauscher 46 und die Pumpe 72 umfasst. Somit kann unabhängig vom sonstigen System eine Standheizungsfunktion erfüllt werden, bei welcher die im Heizgerät 70 generierte Wärme mit hoher Effizienz im Heizungswärmetauscher 46 auf in den Fahrzeuginnenraum einzuleitende Luft übertragen werden kann. Synchron zu diesem Betrieb ist es selbstverständlich möglich, durch entsprechende Ansteuerung des Mehrwegeventils 36 auch den verbleibenden Systembereich weiter zu betreiben, beispielsweise in dem in Fig. 6 oder dem in Fig. 9 gezeigten Betriebszustand. Bei andersartiger Einstellung der Pumpe 72 kann diese z.B. gekoppelt mit der Ansteuerung des Mehrwegeventils 36 so geschaltet sein bzw. den Strömungweg so schalten, dass die Leitungsabschnitte 48' und 48" in Verbindung stehen, ebenso wie die Leitungsabschnitte 50' und 50", so dass durch entsprechende parallele Ansteuerung des Mehrwegeventils 36 nunmehr das Heizgerät 70 und auch die Pumpe 72 in den verbleibenden Systembereich eingeschaltet sind und beispielsweise bei Betrieb in dem in Fig. 8 gezeigten Betriebszustand oder dem in Fig. 7 gezeigten Betriebszustand zusätzlich dazu beitragen, Wärme auf das Heizmeidum zu übertragen und somit beispielsweise im Kaltstartmodus das Antriebsaggregat 42 und das Heizmedium schneller zu erwärmen.

Wie bereits beschrieben, ist es möglich, durch das Positionieren des Mehrwegeventils 36 in Zwischenventilstellungen auch Zustände vorzusehen, in denen nicht nur zwei Hauptventilanschlüsse miteinander kommunizieren, sondern auch mehrere derartige Anschlüsse kommunizieren. So kann beispielsweise auch eine Zwischenventilstellung eingenommen werden, die zwischen den Zuständen b) und c) der Figuren 1 bis 4 liegt. Beispielsweise dann, wenn in einem Zustand, in dem zunächst das Mehrwegeventil in der Ventilstellung c) war und somit das Kühlmedium zum Heizungswärmetauscher 46 geleitet wird, zusätzlich auch noch das Kühlen bei zunehmender Erhitzung des Kühlmediums erforderlich ist. Durch geringfügiges Verstellen vom Zustand c) in Richtung zum Zustand b) wird auf der Zirkulationspfad zum Kühlerwärmetauscher 44 zugeschaltet, wobei beispielsweise dadurch, dass die dann eingenommene Zwischenventilstellung noch näher beim Zustand c) liegt, die wesentliche Zirkulation über den Heizungswärmetauscher laufen wird.

## Patentansprüche

1. Fahrzeug-Kühl/Heiz-System, umfassend:
- ein Mehrwegeventil (36), dieses umfassend eine Ventilgehäuseanordnung (2, 34), in welcher eine Ventilkammer (8) ausgebildet ist, vier zur Ventilkammer (8) führende Hauptventilanschlüsse (3, 4, 5, 6), ein Hauptventilorgan (1), welches zum wahlweisen Unterbrechen und Freigeben der Verbindung der Hauptventilanschlüsse (3, 4, 5, 6) mit der Ventilkammer (8) in eine Mehrzahl von Ventilorganstellungen bringbar ist, wobei in jeder Ventilorganstellung des Hauptventilorgans (1) wenigstens zwei der Hauptventilanschlüsse (3, 4, 5, 6) in Verbindung mit der Ventilkammer (8) stehen,
- eine erste Fluidleitung (58), welche eine Verbindung zwischen einem ersten Hauptventilanschluss (3) und einer ersten Wärmetauscheranordnung (44) vorsieht,
- eine zweite Fluidleitung (62), welche eine Verbindung zwischen einem zweiten Hauptventilanschluss (5) und der ersten Wärmetauscheranordnung (44) vorsieht,
- eine dritte Fluidleitung (48), welche eine Verbindung zwischen einem dritten Hauptventilanschluss (4) und einer zweiten Wärmetauscheranordnung (46) vorsieht,
- eine vierte Fluidleitung (50), welche eine Verbindung zwischen einem vierten Hauptventilanschluss (6) und der zweiten Wärmetauscheranordnung (46) vorsieht,
- eine fünfte Fluidleitung (56), welche eine Verbindung zwischen dem ersten Hauptventilanschluss (3) oder dem zweiten Hauptventilanschluss (5) und einem Antriebsaggregat (42) vorsieht,
- eine sechste Fluidleitung (54), welche eine Verbindung zwischen dem dritten Hauptventilanschluss (4) oder dem vierten Hauptventilanschluss (6) und dem Antriebsaggregat (42) vorsieht,
**gekennzeichnet durch** wenigstens einen zur Ventilkammer (8) führenden Nebenventilanschluss (32) und ein diesem zugeordnetes und zum Unterbrechen und Freigeben der Verbindung des Nebenventilanschlusses (32) mit der Ventilkammer (8) verstellbares Nebenventilorgan (28), wobei das Nebenventilorgan (28) in Abhängigkeit von einer Temperatur im Bereich der Ventilkammer (8) zwischen einer Unterbrechungsstellung und einer Freigabestellung verstellbar ist, und eine siebte Fluidleitung (60), welche eine Verbindung zwischen dem Nebenventilanschluss (32) und einer Fluidleitung von erster Fluidleitung (58), zweiter Fluidleitung (62), dritter Fluidleitung (48) und vierter Fluidleitung (50) vorsieht, wobei das Nebenventilorgan (28) mit ansteigender Temperatur im Bereich der Ventilkammer (8) in Richtung Freigabestellung verstellt wird zur Abgabe von Fluid aus der Ventilkammer (8) zu dem Nebenventilanschluss (32).

2. Fahrzeug-Kühl/Heiz-System nach Anspruch 1,
**dadurch gekennzeichnet, dass** das Nebenventilorgan (28) ein Stellelement (26) aufweist, das durch thermisch induzierte Abmessungsänderung das Nebenventilorgan (28) zwischen der Unterbrechungsstellung und der Freigabestellung verstellt.

3. Fahrzeug-Kühl/Heiz-System nach Anspruch 2,
**dadurch gekennzeichnet, dass** das Stellelement (26) das Nebenventilorgan (28) gegen eine dieses in Richtung Unterbrechungsstellung vorspannende Krafteinwirkung in Richtung Freigabestellung verstellt.

4. Fahrzeug-Kühl/Heiz-System nach einem der Ansprüche 1 bis 3,
**dadurch gekennzeichnet, dass** durch Verstellung des Nebenventilorgans (28) zwischen der Unterbrechungsstellung und der Freigabestellung die Verbindung von wenigstens einem der Hauptventilanschlüsse (3, 4, 5, 6) mit der Ventikammer (8) veränderbar ist.

5. Fahrzeug-Kühl/Heiz-System nach einem der Ansprüch 1 bis 4,
**dadurch gekennzeichnet, dass** unabhängig von der Ventilorganstellung des Hauptventilorgans (1) bei aufgehobener Unterbrechung der Verbindung zwischen dem Nebenventilanschluss (32) und der Ventilkammer (8) eine Fluidaustauschverbindung zwischen dem Antriebsaggregat (32) und einer der Wärmetauscheranordnungen (44, 46) bereitgestellt ist.

6. Fahrzeug-Kühl/Heiz-System nach einem der Ansprüche 1 bis 5,
**dadurch gekennzeichnet, dass** die zweite Wärmetauscheranordnung (46) einen Fahrzeugheizungswärmetauscher (46) umfasst, dass der dritten Fluidleitung (48) oder der vierten Fluidleitung (50) ein Heizgerät (70) zum Erwärmen von darin strömendem Fluid zugeordnet ist, und dass eine Ventilanordnung (72) vorgesehen ist, durch welche wahlweise die dritte Fluidleitung (48) und die vierte Fluidleitung (50) wenigstens abschnittsweise vom dritten Hauptventilanschluss (4) und vom vierten Hauptventilanschluss (6) abkoppelbar sind, um eine Fluidzirkulation zwischen der zweiten Wärmetauscheranordnung (46) und dem Heizgerät (70) zu erzeugen, oder die dritte Fluidleitung (48) und die vierte Fluidleitung (50) zur Anbindung der zweiten Wärmetauscheranordnung (46) an den dritten Hauptventilanschluss (4) und den vierten Hauptventilanschluss (6) freigebbar ist.

## Claims

1. A vehicle cooling/heating system, comprising:
- a multiple way valve (36), comprising a valve housing arrangement (2, 34), wherein a valve chamber (8) is formed, four main valve joints (3, 4, 5, 6) leading to the .valve chamber (8), a main valve body (1) able to be brought into a plurality of valve body positions to selectively interrupt and release the connection of the main valve joints (3, 4, 5, 6) to the valve chamber (8), at least two of the main valve connections (3, 4, 5, 6) being in communication with the valve chamber (8) in each valve body position of the main valve body (1),
- a first fluid conduit (58) providing a connection between a first main valve joint (3) and a first heat exchanger arrangement (44),
- a second fluid conduit (62) providing a connection between a second main valve joint (5) and the first heat exchanger arrangement (44),
- a third fluid conduit (48) providing a connection between a third main valve joint (4) and a second heat exchanger arrangement (46),
- a fourth fluid conduit (50) providing a connection between a fourth main valve joint (6) and the second heat exchanger arrangement (46),
- a fifth fluid conduit (56) providing a connection between the first main valve joint (3) or the second main valve joint (5) and an engine (42),
- a sixth fluid conduit (54) providing a connection between the third main valve joint (4) or the fourth main valve joint (6) and the engine (42),
**characterized by** at least one secondary valve joint (32) leading to the valve chamber (8) and a secondary valve body (28), associated to the latter, adjustable for interrupting and releasing the connection of the secondary valve joint (28) to the valve chamber (8), the secondary valve body (28) being adjustable between an interrupting position and a release position depending on a temperature in the valve chamber (8) zone, and a seventh fluid conduit (60) providing a connection between the secondary valve joint (32) and a fluid conduit out of the first fluid conduit (58), the second fluid conduit (62), the third fluid conduit (48) and the fourth fluid conduit (50), the secondary valve body (28) being, with rising temperatures in the valve chamber (8) zone, adjusted towards the release position for discharging fluid from the valve chamber (8) towards the secondary valve joint (32).

2. A vehicle cooling/heating system according to claim 1,
**characterized by** the secondary valve body (28) having an actuator (26) which adjusts the secondary valve body (28) between the interrupting position and the release position using thermally induced dimension changes.

3. A vehicle cooling/heating system according to claim 2,
**characterized by** the actuator (26) adjusting the secondary valve body (28) towards the release position against a force biasing the latter towards the interrupting position.

4. A vehicle cooling/heating system according to one of claims 1 to 3,
**characterized in that** by adjusting the secondary valve body (28) between the interrupting position and the release position the connection of at least one of the main valve joints (3, 4, 5, 6) to the valve chamber (8) may be modified.

5. A vehicle cooling/heating system according to one of claims 1 to 4,
**characterized in that** independently of the valve body position of the main valve body (1) a fluid exchange connection is provided between the engine (42) and one of the heat exchanger arrangements (44, 46) when the interruption of the connection between the secondary valve joint (32) and the valve chamber (8) is reversed.

6. A vehicle cooling/heating system according to one of claims 1 to 5,
**characterized by** the second heat exchanger arrangement (46) comprising a vehicle heating heat exchanger (46), by a heating device (70) for heating fluid flowing therein being related to the third fluid conduit (48) or the fourth fluid conduit (50) and by a valve arrangement (72) being provided, whereby at least parts of the third fluid conduit (48) and the fourth fluid conduit (50) may selectively be uncoupled from the third main valve joint (4) and the fourth main valve joint (6) to create circulation of fluid between the second heat exchanger arrangement (46) and the heating device (70), or the third fluid conduit (48) and the fourth fluid conduit (50) may be released for coupling the second heat exchanger arrangement (46) to the third main valve joint (4) and the fourth main valve joint (6).

## Revendications

1. Système de rafraîchissement/chauffage d'un véhicule, comprenant:
- une soupape multidirectionnelle (36), cette dernière comprenant un arrangement de boîtier de soupape (2, 34), une chambre de soupape (8) étant formée là dedans, quatre raccordements principaux de soupape (3, 4, 5, 6) menant vers la chambre de soupape (8), un corps de soupape principale (1) qui peut être mené à une multitude de positions de corps de soupape pour interrompre et débloquer selectivement la connexion entre les raccordements principaux de soupape (3, 4, 5, 6) et la chambre de soupape (8), au moins deux des raccordements principaux de soupape (3, 4, 5, 6) étant en communication avec la chambre de soupape (8) dans chaque position du corps de la soupape principale (1),
- un premier circuit de liquide (58) prévoyant une connexion entre un premier raccordement de soupape principale (3) et un premier arrangement d'échangeur thermique (44),
- un deuxième circuit de liquide (62) prévoyant une connexion entre un deuxième raccordement de soupape principale (5) et le premier arrangement d'échangeur thermique (44),
- un troisième circuit de liquide (48) prévoyant une connexion entre un troisième raccordement de soupape principale (4) et un deuxième arrangement d'échangeur thermique (46),
- un quatrième circuit de liquide (50) prévoyant une connexion entre un quatrième raccordement de soupape principale (6) et le deuxième arrangement d'échangeur thermique (46),
- un cinquième circuit de liquide (56) prévoyant une connexion entre le premier raccordement de soupape principale (3) ou le deuxième raccordement de soupape principale (5) et un élément d'entraînement (42),
- un sixième circuit de liquide (54) prévoyant une connexion entre le troisième raccordement de soupape principale (4) ou le quatrième raccordement de soupape principale (6) et l'élément d'entraînement (42),
**caractérisé par** au moins un raccordement de soupape secondaire (32) menant à la chambre de soupape (8) et un corps de soupape secondaire (28) associé à ce dernier et ajustable pour interrompre et débloquer la connexion du raccordement de soupape secondaire (32) à la chambre de soupape (8), le corps de soupape secondaire (28) étant réglable entre une position d'interruption et une position de débloquage, dépendant d'une température dans la zone de la chambre de soupape (8), et
un septième circuit de liquide (60) prévoyant une connexion entre le raccordement de soupape secondaire (32) et un circuit de liquide sélecté du premier circuit de liquide (58), deuxième circuit de liquide (62), troisième circuit de liquide (48) et quatrième circuit de liquide (50), le corps de soupape secondaire (28) étant réglé vers la position de débloquage avec une température croissante dans la zone de la chambre de soupape (8) pour dégager du liquide de la chambre de soupape (8) vers le raccordement de soupape secondaire (32).

2. Système de rafraîchissement/chauffage d'un véhicule selon la revendication 1,
**caractérisé par** le corps de soupape secondaire (28) comprenant un actuateur (26) qui déplace le corps de soupape secondaire (28) entre la position d'interruption et la position de débloquage par des changements de dimension thermiquement induits.

3. Système de rafraîchissement/chauffage d'un véhicule selon la revendication 2,
**caractérisé par** l'actuateur (26) déplaçant le corps de soupape secondaire (28) vers la position de débloquage contre une force qui tend ce dernier vers la positiond'interruption.

4. Système de rafraîchissement/chauffage d'un véhicule selon une des revendications 1 à 3,
**caractérisé par** la connexion de au moins un des raccordements principaux de soupape (3, 4, 5, 6) à la chambre de soupape (8) étant modifiable en changeant le corps de soupape secondaire (28) entre la position d'interruption et la position de débloquage.

5. Système de rafraîchissement/chauffage d'un véhicule selon une des revendications 1 à 4,
**caractérisé en ce que** indépendamment de la position du corps de la soupape principale (1) une connexion d'échange de liquide est prévue entre l'élément d'entraînement (32) et un des arrangements d'èchangeur thermique (44, 46), la connexion entre le raccordement de soupape secondaire (32) et la chambre de soupape (8) n'étant plus interrompue.

6. Système de rafraîchissement/chauffage d'un véhicule selon une des revendications 1 à 5,
**caractérisé par** le deuxième arrangement d'échangeur thermique (46) comprenant un échangeur thermique de chauffage de véhicule (46), par un appareil de chauffage (70) étant associé au troisième circuit de liquide (48) ou au quatrième circuit de liquide (50) pour chauffer la liquide circulant là dedans, et par un arrangement de soupape (72) étant prévu qui découple sélectivement, au moins en partie, le troisième circuit de liquide (48) et le quatrième circuit de liquide (50) du troisième raccordement de soupape principale (4) et du quatrième raccordement de soupape principale (6) pour créer une circulation de liquide entre le deuxième arrangement d'échangeur thermique (46) et l'appareil de chauffage (70), ou qui débloque le troisième circuit de liquide (48) et le quatrième circuit de liquide (50) pour connecter le deuxième arrangement d'échangeur thermique (46) au troisième raccordement de soupape principale (4) et au quatrième raccordement de soupape principale (6).
